# EUROPÄISCHE PATENTSCHRIFT

(11) **EP 2 740 932 B1**
(45) Veröffentlichungstag und Bekanntmachung des Hinweises auf die Patenterteilung: **11.05.2016**
(21) Anmeldenummer: 12008157.5
(22) Anmeldetag: 06.12.2012
(51) Int. Cl.: F03D 80/00, F03D 1/00, F03D 15/00

(54) **Windenergieanlage**
Wind energy system
Eolienne

(43) Veröffentlichungstag der Anmeldung: 11.06.2014
(73) Patentinhaber: Nordex Energy GmbH, 22419 Hamburg (DE)
(72) Erfinder: Nickel, Viktor, 22305 Hamburg (DE); Nitzpon, Joachim, 18209 Steffenshagen (DE); Kästner, Bernhard, 22848 Norderstedt (DE); Faber, Axel, 22083 Hamburg (DE)
(74) Vertreter: Hauck Patentanwaltspartnerschaft mbB

(56) Entgegenhaltungen:
- EP-A1- 2 143 942
- DE-A1-102011 008 029

## Beschreibung

Die vorliegende Erfindung betrifft eine Windenergieanlage mit einer Rotornabe, einem Generator und einer Antriebswelle, die ein über die Rotornabe aufgenommenes Drehmoment an eine Eingangswelle des Generators weiterleitet.

Aus EP 2 397 690 A1 ist eine Windenergieanlage mit einer flexiblen Welle bekannt geworden. Die Windenergieanlage besitzt einen Maschinenträger und ein leeseitig montiertes Generatorsystem. Ferner ist eine Rotornabe vorgesehen, die auf einer Welle auf dem Maschinenträger montiert ist. Die Welle überträgt die Belastungen aus der Windanströmung und dem Gewicht der Rotornabe und der mit ihr verbundenen Rotorblätter (Wind- und Gewichtslast) auf den Maschinenträger und ist fest mit der Rotornabe und dem Generatorsystem verbunden, um ein Drehmoment von der Rotornabe an das Generatorsystem zu übertragen. Die Welle ist eine mechanisch anisotrop ausgelegte Welle, die Biegemomente zwischen der Rotornabe und dem Generatorsystem begrenzt und aus einem anisotropen Faserverbundwerkstoff hergestellt ist. Durch ihre Anisotropie ist hierbei die Rotorwelle einerseits in axialer Richtung biegbar, andererseits torsionssteif in Umfangsrichtung. Indem die Flexibilität der Welle die Übertragung von Biegemomenten zwischen dem Rotor und dem Generator vermeidet, wird eine Materialerschöpfung an diesen Komponenten reduziert. Die Enden der Rotorwelle können hierbei mit metallischen Verbindungsflanschen versehen sein, die mit den Enden der Welle aus Faserverbundwerkstoff verstiftet sind.

Aus EP 1 677 005 B1 ist eine Windenergieanlage mit konischem Doppel-Walzenlager bekannt. Die Windenergieanlage umfasst eine Hauptwelle, an der die Windturbinenblätter montiert sind. Ein Getriebe ist vorgesehen, mit dem eine Rotation der Hauptwelle zu höheren Drehzahlen übersetzt wird, um auf eine Ausgangswelle ausgegeben zu werden. Ein Generator wird von der Ausgangswelle des Getriebes betrieben. Eine Kupplung verbindet die Hauptwelle mit einer Eingangswelle des Getriebes. Ein zweireihiges Kegelrollenlager lagert die Hauptwelle, um die gesamte Radiallast, Schublast und Biegelast aufzunehmen und nicht an das Getriebe zu übertragen. Die Kupplung zwischen Hauptwelle und Eingangswelle des Getriebes erfolgt über eine Zahnkupplung.

Aus WO 02/33254 A1 ist eine Windenergieanlage mit einer an zwei Punkten gelagerten Turbinenwelle und einer mit dieser verbundenen Generatorwelle bekannt geworden. Die Generatorwelle treibt einen innenliegenden Rotor des Generators an und ist gegenüber dem Stator in zwei Punkten gelagert. Der außenliegende Stator ist durch eine nicht drehende Kupplung in seiner Position gesichert, wobei die Kupplung im Wesentlichen kein Biegemoment und keine axiale Kraft auf den Stator ausübt, wenn eine Biegung der Turbinenwelle aufgrund der angreifenden Kräfte der Rotornabe auftritt.

Aus WO 2011/061 363 A1 ist eine Windenergieanlage mit einem direkt betätigten Triebstrang bekannt geworden. Der Triebstrang weist eine Hauptwelle und eine Generatorwelle auf, wobei die Generatorwelle einen Permanentmagnetgenerator antreibt. Der Generator und die Rotornabe der Windenergieanlage sind auf entgegen gesetzten Seiten eines Maschinenträgers angeordnet. Die Rotornabe wird für einen Maschinenträger mittels eines Hauptlagers derart gelagert, dass keine Übertragung von Biegemomenten über die Hauptwelle erfolgt. Die Anschlüsse zwischen dem Hauptlager, der Hauptwelle und der Generatorwelle sind derart ausgelegt, dass das Drehmoment des Windrotors zur Generatorwelle ohne Biegemoment übertragen wird.

Aus EP 2 143 942 A1 ist eine Windenergieanlage bekannt, die einen direkt angetriebenen Generator mit einer inneren Statoranordnung und einer außenliegenden Rotoranordnung zeigt. Eine stationäre äußere Welle und eine einteilige drehbare innere Welle besitzen eine zentrale Achse. Über zwei Lager ist die drehbare innere Welle innerhalb der stationären äußeren Welle gelagert, wobei ein Lager hinten am Ende der inneren Welle hinter dem Stator des Generators angeordnet ist.

Aus DE 10 2011 008 029 A1 ist eine Windenergieanlage bekannt, die einen Maschinenträger und an sich gegenüberliegenden Seiten des Maschinenträgers einen Rotor und einen Generator aufweist, wobei der Rotor und der Generator über eine Antriebswelle, bestehend aus einer Rotorwelle und einer Generatorwelle und einer dazwischen angeordneten Kupplung, die die Wellenabschnitte getriebelos aneinander koppelt, gekoppelt sind. Der Generator weist einen außenliegenden Rotor auf. Die mit dem Rotor des Generators verbundene Generatorwelle ist mittels Lager auf dem Statorträger des Rotors gelagert, wobei die Lager außen am Statorträger und seitlich vom Stator angeordnet sind.

Der Erfindung liegt die Aufgabe zugrunde, eine Windenergieanlage mit einem Triebstrangkonzept zur Verfügung zu stellen, bei dem ein als Außenläufer ausgebildeter Generator hinter dem Turm angeordnet ist und durch die verwendeten Triebstrangkomponenten und ihre Anordnung keine wesentlichen Veränderungen des Luftspalts zu erwarten ist.

Erfindungsgemäß besitzt die Windenergieanlage eine Rotornabe, an der mindestens ein Rotorblatt befestigt ist. Ferner weist die Windenergieanlage einen Generator auf der einen außenliegenden Rotor und einen innenliegenden Stator aufweist. Die Antriebswelle der Windenergieanlage weist einen mit dem Rotor des Generators verbundenen Generatorwellenabschnitt aufweist. Dieser Generatorwellenabschnitt ist über ein doppelreihiges Kegelrollenlager oder zwei einreihige Kegelrollenlager innerhalb des Stators des Generators gelagert ist. Die erfindungsgemäße Windenergieanlage weist einen Maschinenträger auf, der mit dem Stator des Generators verbunden ist.

Erfindungsgemäß besitzt die Antriebswelle der Windenergieanlage auch einen mit der Rotornabe verbundenen Rotorwellenabschnitt, der über ein zweites Lager gegenüber dem Maschinenträger gelagert ist. Vorteilhafterweise ist bei der Windenergieanlage der Rotorwellenabschnitt als ein separates Bauteil ausgebildet.

Vorzugsweise weist der Generatorwellenabschnitt einen sich in Richtung der Rotornabe konisch verjüngenden Bereich auf.

Der Generatorwellenabschnitt weist vorteilhafterweise einen zylindrischen Bereich auf, in dem seine Lagerung erfolgt. Der zylindrische Bereich ist bevorzugt auf der der Rotornabe abgewandten Seite des Generatorwellenabschnitts angeordnet.

Bevorzugt ist bei der erfindungsgemäßen Windenergieanlage der Generatorwellenabschnitt innerhalb des Stators des Generators außermittig gelagert. Besonders bevorzugt ist der Generatorwellenabschnitt in seiner von der Rotomabe fortweisenden Hälfte gelagert.

Bevorzugt weisen das doppelreihige Kegelrollenlager oder die zwei einreihigen Kegelrollenlager des Generatorwellenabschnitts eine O-Konfiguration auf.

In einer bevorzugten Ausführungsform besitzt der Rotorwellenabschnitt in seiner axialen Richtung eine Länge, die kleiner als der maximale Durchmesser des Rotorwellenabschnitts im Bereich seines Anschlusses an die Rotornabe ist. Der maximale Durchmesser des Rotorwellenabschnitts ist gegeben durch den maximale Durchmesser des Rotorwellenabschnitts in einer Ebene senkrecht zur Achse des Rotorwellenabschnitts. Diese Ausgestaltung des Rotorwellenabschnitts erlaubt eine besonders kurze Ausbildung des Rotorwellenabschnitts. Durch die kurze Ausbildung des Rotorwellenabschnitts wird Gewicht eingespart. Weiterhin bietet die kompakte Gestaltung Vorteile in der Herstellung des Rotorwellenabschnitts. Die Formgebung des Rotorwellenabschnitts wurde so optimiert, dass er hohen mechanischen Belastungen ausgesetzt und trotzdem durch einen Gußprozeß einfach hergestellt werden kann. Hier ist von Bedeutung, dass die Gestaltung des Rotorwellenabschnitts die Benutzung von Gußformen wie Gußkokillen ermöglicht, die in ihrer Gestaltung eine einfache Form aufweisen. Ebenso ist durch die Gestaltung des Rotorwellenabschnitts beim Gußprozess eine gerichtete Erstarrung des Gußkörpers möglich. Hierdurch werden abgeschlossene thermische Zentren im Gußkörper bei seinem Abkühlprozess vermieden.

Bevorzugt besitzt die Windenergieanlage eine Antriebswelle, die einen mit der Rotomabe verbundenen Rotorwellenabschnitt, einen mit dem Rotor des Generator verbundenen Generatorwellenabschnitt und einen Zwischenwellenabschnitt aufweist, der mit dem Rotorwellenabschnitt und Generatorwellenabschnitt verbunden ist. Insbesondere kann bei der Windenergieanlage der Rotorwellenabschnitt als ein separates Bauteil ausgebildet sein, das mit dem Zwischenwellenabschnitt verbunden ist.

Rotornabe, Rotor des Generators und die Rotornabe und Generator verbindende Antriebswelle rotieren mindestens um parallele Achsen, vorzugsweise um eine gemeinsame Achse. Durch die Richtung der Rotationsachse, um die hierbei die Antriebswelle rotiert, wird die axiale Richtung der Antriebswelle beschrieben. Der mit der Rotornabe verbundene Wellenabschnitt weist an seiner der Rotornabe in axialer Richtung zugewandten Seite einen Bereich in axialer Richtung auf, in dem er mit der Rotornabe verbunden ist, der Bereich seines Anschlusses an die Rotornabe. Die Verbindung zwischen der Rotornabe und dem mit ihr verbundenen Rotorwellenabschnitt erfolgt bevorzugt, beispielsweise durch Verschrauben und/oder Verstiften und/oder Verklemmen und/oder Nieten. Beim Verschrauben können vorzugsweise Rotornabe und Rotorwellenabschnitt Bohrungen jeweils mit oder ohne Innengewinde aufweisen, durch die das Ende einer Schraube geschraubt wird, die durch eine aufgeschraubte Mutter gesichert ist, oder durch die ein Gewindebolzen geschraubt wird, der beidseitig durch Muttern gesichert ist. Auch kann entweder die Rotornabe eine durchgehende Bohrung mit oder ohne Innengewinde aufweisen und der mit ihr verbundene Rotorwellenabschnitt eine Sacklochbohrung mit Gewinde oder die Rotornabe weist eine Sacklochbohrung mit Innengewinde auf und der mit ihr verbundene Rotorwellenabschnitt eine durchgehende Bohrung mit oder ohne Innengewinde. Hierbei wird dann zur Befestigung eine Schraube zunächst durch die durchgehende Bohrung geschraubt, soweit die Bohrung ein Gewinde aufweist, und dann in die Sachlochbohrung. In dem Bereich, in dem eine derartige Verbindung zwischen der Rotornabe und dem mit ihr verbundenen Rotorwellenabschnitt erfolgt, ist der maximale Außendurchmesser des Rotorwellenabschnitts größer als die Länge des mit der Rotornabe verbundenen Rotorwellenabschnitts in seiner axialen Richtung. Die Verbindung zwischen Rotornabe und dem mit ihr verbundenen Rotorwellenabschnitt liegt dabei in radialer Richtung vorzugsweise im äußeren Bereich des maximalen Außendurchmessers des Rotorwellenabschnitts, d. h. im Bereich zwischen 85% und 99% des maximalen Außendurchmessers, vorzugsweise zwischen 92% und 98% des maximalen Außendurchmessers und besonders bevorzugt zwischen 94% und 97% des maximalen Außendurchmessers.

Die Verbindung zwischen Rotornabe und Rotorwellenabschnitt erfolgt bevorzugt auf einem oder mehreren Kreisen konzentrisch um eine gemeinsame Achse von Rotornabe und Rotorwellenabschnitt, um die beide rotieren. Vorzugsweise sind die Verbindungselemente wie Schrauben, Nieten, Bolzen, Stifte in Umfangsrichtung gleichmäßig auf dem oder den Kreisen um die gemeinsame Achse von Rotornabe und Rotorwellenabschnitt angeordnet, wobei auf verschiedenen Kreisen unterschiedlich viele Verbindungselemente angeordnet sein können. Gleichzeitig können alle oder einige der Verbindungselemente auf einem oder mehreren der Kreise, auf denen die Verbindungselemente angeordnet sind, dazu genutzt werden, eine Arretierscheibe für die Windenergieanlage mit dem Rotorwellenabschnitt zu verbinden.

Das Verhältnis des maximalen Durchmessers des Rotorwellenabschnitts zu seiner Länge in axialer Richtung beträgt insbesondere mindestens 1,5:1 und höchstens 3:1, bevorzugt mindestens 2:1 und höchstens 2,5:1 und besonders bevorzugt mindestens 2,2:1 und höchstens 2,3:1. Die Vorteile eines so gewählten Verhältnisses zwischen dem maximalen Durchmesser des Rotorwellenabschnitts und seiner Länge in axialer Richtung liegen in einem optimierten Kraftfluss der vom Rotor auf den Rotorwellenabschnitt aufgebrachten Kräfte, einer optimierten Geometrie zur Fertigung des Rotorwellenabschnitts, insbesondere bei der Fertigung als Gußteil, und einer optimierten Geometrie des Rotorwellenabschnitts, um auch noch eine Arretierscheibe und/oder Bremsscheibe oder Segmente einer Bremsscheibe an den Rotorwellenabschnitt in einfacher Weise montieren zu können.

In einer bevorzugten Weiterführung der Erfindung besitzt der Rotorwellenabschnitt an seinem Ende in Richtung auf die Rotornabe einen ersten Flanschbereich, der über eine Krümmung in einen Wellenkörper übergeht, der in einer bevorzugten Ausführungsform zylindrisch bezogen auf die Achse des Rotorwellenabschnitts ausgeführt ist. Bevorzugt beschreibt die Krümmung einen Winkel bezogen auf die Achse des Rotorwellenabschnitts derart, dass der Flanschbereich nach außen über den Wellenkörper vorsteht. Dieser Winkel beträgt 70° bis 110°, bevorzugt 85° bis 95° und besonders bevorzugt 90°. Hierbei kann der Rotorwellenabschnitt mit dem Flanschbereich enden, er kann jedoch auch den Flanschbereich in seinem Endbereich aufweisen, sich aber auch in axialer Richtung über den Flanschbereich in Richtung der Rotornabe noch fortsetzen. Alternativ kann der Wellenkörper, bezogen auf die Achse des Rotorwellenabschnitts auch konisch verlaufen, bevorzugt mit einem konstanten Winkel gegenüber der Achse des Rotorwellenabschnitts, der bevorzugt kleiner als 10° ist und besonders bevorzugt kleiner als 5°.

Das Verhältnis des maximalen Durchmessers des Rotorwellenabschnitts zum Außendurchmesser eines zylindrischen Wellenkörpers oder zum minimalen Außendurchmesser eines sich konisch im Richtung der Rotornabe verjüngenden Wellenkörpers oder zum maximalen Außendurchmesser eines sich konisch in Richtung der Rotornabe erweiternden Wellenkörpers liegt bevorzugt zwischen 1,2:1 und 2:1, besonders bevorzugt zwischen 1,3:1 und 1,7:1 und ganz besonders bevorzugt zwischen 1,4:1 und 1,5:1. Aus diesem Verhältnis ergibt sich, in welchem Maß der Flanschbereich über den Wellenkörper an der Basis des Flansches übersteht.

Das absolute Maß des Überstands des Flanschbereichs ergibt sich aus der Differenz des maximalen Durchmessers des Rotorwellenabschnitts zum Außendurchmesser einen zylindrischen Wellenkörpers oder zum minimalen Außendurchmesser eines sich konisch im Richtung der Rotornabe verjüngenden Wellenkörpers oder zum maximalen Außendurchmesser eines sich konisch in Richtung der Rotornabe erweiternden Wellenkörpers. Bevorzugt ist dieser Überstand des Flanschbereichs nicht vollständig gekrümmt, sondern nach der Krümmung gerade ausgeführt. Bevorzugt sind die äußeren 15% bis 60% des Überstands gerade, besonders bevorzugt sind die äußeren 20 % bis 50% des Überstands gerade und besonders bevorzugt sind die äußeren 30% bis 40% des Überstands gerade.

Durch die Krümmung in dem Rotorwellenabschnitt zur Bildung des Flanschbereichs wird ein nach außen vorstehender Flanschbereich geschaffen, der integral mit dem Rotorwellenabschnitt ausgebildet ist und nicht als separates Bauteil an dem Rotorwellenabschnitt befestigt werden muss. Vielmehr kann der mit der Rotornabe verbundene Rotorwellenabschnitt als ein Gussteil aus Gusseisen hergestellt werden. Bevorzugt ist hierbei das Gusseisen mit Kugelgraphit versehen, d.h. ist ein Gusswerkstoff, der im Wesentlichen auf Eisen, Kohlenstoff und Silizium basiert und bei dem der Kohlenstoff überwiegend in Form von kugeligen Graphitpartikeln vorliegt. Derartige Werkstoffe sind insbesondere aus der DIN EN 1563:2012-03 vom März 2012 bekannt. Besonders bevorzugt weist das Gusseisen mit Kugelgraphit, aus dem Rotorwellenabschnitt besteht, ein ferrithaltiges Gefüge auf, das insbesondere das im Werkstoff vorherrschende Gefüge ist. Hierbei weist der Gusswerkstoff des Rotorwellenabschnitts nach der Fertigung bevorzugt eine Bruchdehnung von mindestens 12%, besonders bevorzugt von mindestens 15%, ganz besonders bevorzugt von mindestens 17% und optimalerweise von mindestens 18% auf, gemessen an Proben aus gegossenen Probestücken mit einer maßgeblichen Wanddicke t ≤ 30 mm, die durch eine mechanische Bearbeitung hergestellt wurden (ermittelt gemäß der Norm DIN EN 1563:2012-03 vom März 2012, siehe insbesondere Tabelle 1). Außerdem weist der Gusswerkstoff des Rotorwellenabschnitts nach seiner Fertigung bevorzugt eine Zugfestigkeit von mindestens 300 MPa, besonders bevorzugt von mindestens 350 MPa, ganz besonders bevorzugt von mindestens 380 MPa und optimalerweise von mindestens 400 MPa auf, ebenfalls gemessen an Proben aus gegossenen Probestücken mit einer maßgeblichen Wanddicke t ≤ 30 mm, die durch eine mechanische Bearbeitung hergestellt wurden (ermittelt gemäß der Norm DIN EN 1563:2012-03 vom März 2012, siehe insbesondere Tabelle 1). In besonders vorteilhafter Weise weist des Gusswerkstoff des Rotorwellenabschnitts sowohl den optimalen Wert der Bruchdehnung von mindestens 18% auf als auch den optimalen Wert der Zugfestigkeit von mindestens 400 MPa. Hier sind als Gusswerkstoff des Rotorwellenabschnitts besonders die in der Norm DIN EN 1563:2012-03 vom März 2012 genannten Werkstoffe EN-GJS-400-18 und EN-GJS-400-18-LT als mögliche vorteilhafte Werkstoffe zu nennen. Durch einen seitlichen Anguss (Materialzuführung) am Wellenkörper, vorzugsweise am generatorseitigen Ende des Wellenkörpers, ist ein besonders günstiges Abkühl- und Erstarrungsverhalten möglich, wobei der nabenseitige Flanschbereich des Rotorwellenabschnitts als erstes abkühlt und erstarrt. Die Erstarrungszeit des Rotorwellenabschnitts beträgt bei einer Länge des Rotorwellenabschnitts von 1,30 m bis 1,90 m und einem maximalen Durchmesser des Rotorwellenabschnitts von 3 m bis 4 m bevorzugt weniger als 4 Stunden, besonders bevorzugt weniger als 3 Stunden und im ganz besonders bevorzugten Fall weniger als 2 Stunden. Nach dem Erstarren wird der Bereich des Angusses am Gussteil, in dem sich Schlacke und Verunreinigungen angesammelt haben, als Überkopf entfernt.

Das den Rotorwellenabschnitt lagernde Lager ist bevorzugt als ein doppelreihiges Kegelrollenlager ausgebildet. Ein doppelreihiges Kegelrollenlager besitzt den Vorteil, dass Biegemomente und in axialer und radialer Richtung angreifende Kräfte von dem doppelreihigen Kegelrollenlager aufgenommen und an den Maschinenträger abgeleitet werden können, ohne über den generatorseitig folgenden Wellenabschnitt der Antriebswelle weitergeleitet zu werden. Um das Lager auf dem Rotorwellenabschnitt zu lagern, kann der Wellenkörper des Rotorwellenabschnitts noch einen oder mehrere nach außen vorstehende Vorsprünge aufweisen. Bevorzugt ist die Anlagefläche des Lagers an den radialen Vorsprüngen in axialer Richtung in Richtung auf den Generator angeordnet. Bevorzugt sind alle radialen Vorsprünge in einer Ebene senkrecht zur Achse des Rotorwellenabschnitts angeordnet. Ein radialer Vorsprung kann umlaufend um den Umfang des Rotorwellenabschnitts ausgeführt sein oder nur auf Teilabschnitten des Umfanges ausgebildet sein. An diesem Vorsprung kann der Innenring des Lagers, der auch mehrteilig ausgeführt sein kann, sowohl nabenseitig als auch generatorseitig angelagert sein. Die Anlagerung kann entweder direkt oder beabstandet mittels eines oder mehrerer Distanzelemente, bevorzugt mittels eines oder mehrerer Distanzringe erfolgen. In einer bevorzugten Ausführungsform weist der eine radial nach außen stehende Vorsprung oder mehrere nach außen stehende Vorsprünge Bohrungen auf, entweder Sacklochbohrungen mit einer Öffnung auf der Nabenseite des Vorsprunges oder der Vorsprünge oder durchgehende Bohrungen. Diese weisen bevorzugt ein Innengewinde auf. Mit Senkschrauben oder Gewindebolzen und Muttern können mit Hilfe der Bohrungen eine Bremsschreibe oder Bremsscheibensegmente an dem radialen Vorsprung oder radialen Vorsprüngen befestigt werden. Bevorzugt sind alle Bohrungen auf einem Radius um die Achse des Rotorwellenabschnitts angeordnet.

Bezogen auf die Länge des Rotorwellenabschnitts in axialer Richtung sind der radiale Vorsprung oder die radialen Vorsprünge ungefähr in der Mitte des Rotorwellenabschnitts angeordnet. Dies heißt insbesondere, dass die Mitte des Vorsprungs oder der Vorsprünge höchstens 50%, bezogen auf die axiale Länge des Rotorwellenabschnitts, vom nabenseitigen Ende des Rotorwellenabschnitts entfernt ist, bevorzugt 30% bis 45% und besonders bevorzugt 35% bis 42%. Der radiale Vorsprung oder die radialen Vorsprünge sind bevorzugt in dem Bereich des Rotorwellenabschnitts angeordnet, der noch keine Krümmung aufweist, insbesondere in dem Bereich in axialer Richtung, der sich unmittelbar an den gekrümmten Bereich anschließt. Der Abstand zwischen gekrümmten Bereich und nabenseitigem Ende des radialen Vorsprungs oder der radialen Vorsprünge beträgt insbesondere bis zu 10% der Länge des Rotorwellenabschnitts in axialer Richtung, bevorzugt bis zu 5% und besonders bevorzugt bis zu 3% der Länge des Rotorwellenabschnitts in axialer Richtung. Ganz besonders bevorzugt geht der gekrümmte Bereich des Rotorwellenabschnitts direkt in den radialen Vorsprung oder die radialen Vorsprünge über. An seinem generatorseitigen Ende kann der Rotorwellenabschnitt eine Fläche, insbesondere senkrecht zur Achse des Rotorwellenabschnitts, aufweisen, die mindestens eine Sacklochbohrung mit Gewinde aufweist. Mittels dieser Bohrung können Positionskörper durch Verschraubung festgelegt werden, z.B. mit Hilfe von Schrauben, die in die Bohrungen geschraubt werden, so dass mit dem Positionskörpern das Lager des Rotorwellenabschnitts in axialer Richtung festgelegt und gegebenenfalls auch vorgespannt werden kann.

In einer bevorzugten Ausführungsform der Erfindung weist der erste Flanschbereich noch weitere Bohrungen auf, die einen anderen Abstand zur Achse des Rotorwellenabschnitts aufweisen als die Bohrungen, die Nabe und Rotorwellenabschnitt verbinden. Diese Bohrungen weisen bevorzugt ein Gewinde auf. Mittels dieser Bohrungen kann eine Arretierscheibe an dem ersten Flanschbereich durch Verschraubung befestigt werden, indem insbesondere Schrauben eingesetzt werden. Die Arretierscheibe wird hierbei bevorzugt auf der Generatorseite des ersten Flanschbereichs angeordnet.

In einer bevorzugten Ausführungsform sind Bohrungen im ersten Flanschbereich des Rotorwellenabschnitts zur Befestigung der Arretierscheibe auf zwei Kreisen um die Achse des Rotorwellenabschnitts mit unterschiedlichen Radien angeordnet, wobei mit Hilfe der Bohrungen auf einem der zwei Kreise Arretierscheibe und Rotorwellenabschnitt verschraubt werden, vorzugsweise in einen ersten Montageschritt (Vormontage), und mit Hilfe der Bohrungen auf dem anderen der zwei Kreise Arretierscheibe, Rotorwellenabschnitt und Rotornabe verschraubt werden, vorzugsweise in einem zweiten Montageschritt (Endmontage).

Mittels der Arretierscheibe, die ein oder mehrere Arretierbohrungen in einem Abstand von der Achse des Rotorwellenabschnitts aufweist, der den maximalen Radius des ersten Flanschbereichs überschreitet, kann der Rotor der Windenergieanlage festgesetzt werden, indem ein Bolzen durch mindestens eine Arretierbohrung geschoben wird.

In einer bevorzugten Ausgestaltung ist der Rotorwellenabschnitt an seinem zum Generator weisenden Ende mit einem zweiten Flanschabschnitt versehen, der radial nach innen vorsteht. Der zweite Flanschabschnitt besitzt bevorzugt um seinen Umfang verteilte Bohrungen, die zur Verbindung mit einem weiteren Wellenabschnitt, vorzugsweise Zwischenwellenabschnitt, oder einer vor diesem weiteren Wellenabschnitt angeordneten Ausgleichsebene vorgesehen sind. Im Falle des Vorhandenseins eines Zwischenwellenabschnitts verbindet eine weitere Ausgleichsebene den Zwischen- und Generatorwellenabschnitt. Die Ausgleichsebenen bestehen aus mehreren Ausgleichselementen, die bevorzugt als Stahllamellen, beispielsweise eine Stahllamellen-Kupplung ausgeführt sind.

Die beiden Ausgleichsebenen mit jeweils ihrem Ausgleichselement in Kombination mit dem Zwischenwellenabschnitt stellen als Kupplungssystem eine kardanische Kupplung dar, die in der Lage ist, die radialen, angularen und axialen Versätze aufzunehmen, die zwischen dem Rotor- und Generatorwellenabschnitt auftreten können. Diese Versätze können aus Fertigungs- und Montagetoleranzen resultieren sowie aus Verformung des Triebstranges der Windenergieanlage, insbesondere der Antriebswelle bedingt durch Gewichtslasten der Triebstrangkomponenten und Windlasten insbesondere auf den Rotorblättern der Windenergieanlage.

Dadurch, dass zwischen den beiden einzelnen Kupplungen mit ihren Ausgleichsebenen der kardanischen Kupplung sich der Zwischenwellenabschnitt befindet, kann ein größerer radialer Versatz zwischen Rotorwellenabschnitt und Generatorwellenabschnitt auftreten, ohne dass dies zu mechanischen Belastungen der Bauteile führt. Die Länge des Zwischenwellenabschnitts in Richtung der Achse der Antriebswelle beträgt bevorzugt zwischen 35% und 70% der Gesamtlänge der Antriebswelle des Triebstrangs in seiner axialen Richtung, bestehend aus Rotorwellenabschnitt, Zwischenwellenabschnitt und Generatorwellenabschnitt. Besonders bevorzugt beträgt die Länge des Zwischenwellenabschnitts in Richtung der Achse der Antriebswelle zwischen 40% und 60% der Gesamtlänge der Antriebswelle des Triebstrangs und ganz besonders bevorzugt zwischen 45% und 50 % der Gesamtlänge der Antriebswelle des Triebstrangs.

Insbesondere durch die kurze Ausbildung des Rotorwellenabschnitts ist es bei einer begrenzten Länge der Antriebswelle des Triebstranges der Windenergieanlage möglich, dass der Abstand der einzelnen Kupplungen der kardanischen Kupplung und damit die Länge des Zwischenwellenabschnitts besonders groß gewählt werden kann. Hierdurch wird der radiale Versatz zwischen Rotorwellenabschnitt und Generatorwellenabschnitt, der möglich ist, ohne dass die mechanische Belastung der der Bauteile der Antriebswelle des Triebstrangs zu groß wird und hierdurch Schädigungen der Bauteile entstehen können, vergrößert. Eine erfindungsgemäße Windenergieanlage ist daher besonders geeignet, auch unter schwierigen Windbeanspruchungen, wie z.B. bei sehr hohen und/ oder wechselhaften Windbelastungen auf den Rotorblättern der Windenergieanlage, die zum Beispiel auf freier See zu finden sind (Offshore), störungsfrei und zuverlässig arbeiten zu können. Daher weisen die erfindungsgemäßen Windenergieanlagen eine erhöhte Betriebszeit und einhergehende technische Verfügbarkeit auf.

Jede Ausgleichsebene des Triebstrangs wird durch eine Kupplung realisiert. Hierbei kann zum Beispiel um eine Klauenkupplung, Membrankupplung oder Zahnkupplung verwendet werden, vorzugsweise jedoch eine Stahllamellenkupplung. Hierbei werden sowohl an den zweite Flanschbereich des Rotorwellenabschnitts als auch an den beiden Enden des Zwischenwellenabschnitts, soweit einer solcher vorhanden ist, als auch am rotorseitigen Ende des Generatorwellenabschnitts Stahllamellenpakete in Umfangsrichtung abwechselnd angeschraubt.

Die Verwendung von Stahllamellenkupplungen bietet die Vorteile, dass einzelne Stahllamellen einfach auszutauschen sind, ohne dass wie bei anderen Kupplungen ein Austausch mit einem Kran notwendig wird. Die verwendeten Stahllamellen sind in axialer Richtung des Antriebstranges (Axialversatz) und in Umfangsrichtung beweglich (Winkelversatz) in beschränkten Maße beweglich, in radialer Richtung jedoch steif. Bei einer kardanischen Kupplung mit zwei Stahllamellenkupplungen kann jedoch auch ein radialer Versatz zwischen Rotorwellenabschnitt und Generatorwellenabschnitt ausgeglichen werden.

Die Zwischenwelle ist vorzugsweise aus einem Faserverbundwerkstoff hergestellt. Die Enden der Zwischenwelle sind hierbei vorteilhafterweise mit metallischen Verbindungsflanschen versehen sein, die mit den Enden der Welle aus Faserverbundwerkstoff verstiftet sind. Die metallischen Verbindungsflansche werden dann mit den Kupplungen im Antriebsstrang verschraubt, bei einer Stahllamellenkupplung mit den Stahllamellenpaketen. Die Ausrichtung der Fasern ist mindestens in einem Teilbereich des Zwischenwellenabschnitts gegenüber dessen Längsachse geneigt, so dass diese beispielsweise einen wandelförmigen Verlauf besitzen.

Ein Ausführungsbeispiel zu der Erfindung wird nachfolgend näher beschrieben. Es zeigt:
- Fig. 1: eine Ansicht auf den Triebstrang mit Rotornabe und Generator von der Seite,
- Fig. 2: eine Ansicht auf den Triebstrang von oben,
- Fig. 3: einen Längsschnitt durch den Triebstrang in der Ansicht von der Seite,
- Fig. 4: das vergrößerte Detail Z aus Fig. 3 in der Schnittdarstellung von der Seite,
- Fig. 5: das Detail Y aus der Fig. 3 in der Ansicht von der Seite und
- Fig. 6: eine Ansicht eines Zwischenwellenabschnitts mit zwei Kupplungseinrichtungen.

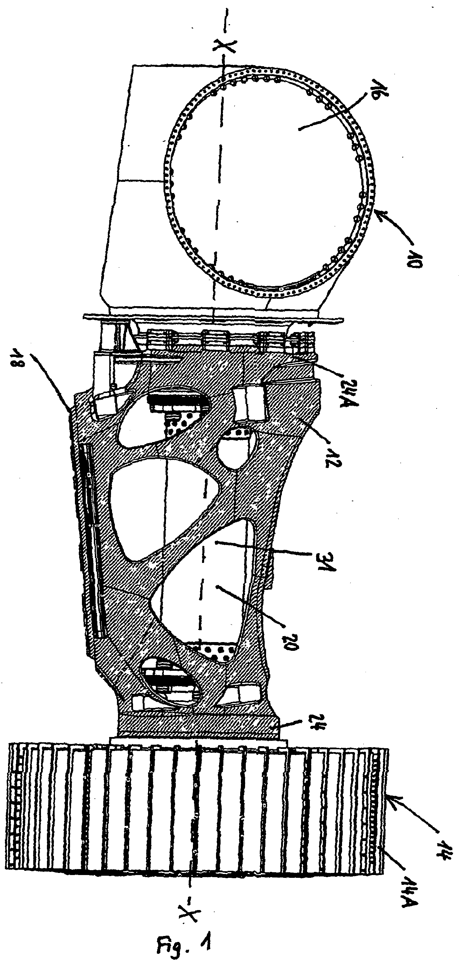

Fig. 1 zeigt in einer Ansicht von der Seite eine Rotornabe 10, einen Maschinenträger 12 und einen Generator 14. Die Rotornabe 10 besteht aus einem Bauteil, das drei kreisförmige Öffnungen 16 für einen Anschluss je eines Rotorblatts besitzt. In der Darstellung aus Fig. 1 sind die nach unten weisende Öffnung 16 und die ungefähr nach 2 Uhr (Uhrstellung bei Sicht von außen auf die Nabe in Richtung der Rotationsachse der Antriebswelle) weisende Öffnung 16 zu erkennen. Die in die 10-Uhr-Position weisende Öffnung 16 ist verdeckt und nur teilweise zu erkennen. Die Rotornabe 10 trägt die Rotorblätter (nicht dargestellt) und wird von diesen gedreht, wobei das aufgenommene Drehmoment über eine Welle weitergetragen wird.

Der Maschinenträger 12 besitzt einen Anschlussbereich 18 zur Verbindung mit einer Azimutdrehverbindung, über die der Maschinenträger 12 drehbar auf einem Turm der Windenergieanlage gelagert ist. Um angreifende Kräfte und Momente besser aufnehmen zu können, ist der Maschinenträger 12 nicht als eine Plattform ausgebildet, sondern besitzt eine annähernd geschlossene Struktur, in der einzelne Durchbrechungen, wie die Durchbrechung 20, vorgesehen sind. Durch seine geschlossene Struktur erlaubt der Maschinenträger 12 einen stabilen, vorzugsweise steifen Anschluss des Generators 14 an einen Flanschbereich 24, der an einem zu dem Generator weisenden Ende des Maschinenträgers vorgesehen ist. Auch an seinem zur Rotornabe weisenden Ende besitzt der Maschinenträger einen umlaufenden, geschlossenen Anschlussbereich 24A. Durch die Durchbrechungen des Maschinenträgers 12 ist die Antriebswelle 31 zu erkennen, die die Rotornabe 10 mit dem Generator 14 verbindet.

Der Generator 14 ist als ein Außenläufer ausgebildet, der sich außerhalb des Maschinenträgers befindet. Der Aufbau des Triebstrangs ist dadurch gekennzeichnet, dass die Rotornabe 10 und der Generator 14 auf gegenüberliegenden Seiten des Maschinenträgers 12 angeordnet sind. Der Generator 14 besitzt einen außenliegenden Läufer 14A, der durch die Rotornabe 10 angetrieben wird und einen innenliegenden Stator 14B, der fest mit dem Maschinenträger 12 im Flanschbereich 24 verbunden ist.

In Fig. 1 ist zu erkennen, dass das System aus Rotornabe und Generator eine Neigung (Tiltwinkel) aufweist, die zum Generator 14 hin abfällt. Der gewählte Tiltwinkel ist abhängig von der Größe der Windenergieanlage und den Rotorblättern der Windenergieanlage. Hierbei ist der Tiltwinkel so zu wählen, dass auch bei einer Durchbiegung langer Rotorblätter diese einen Freigang zu Turmwand der Windenergieanlage aufweisen.

In Fig. 1 ist ebenfalls zu erkennen, dass, bezogen auf die Drehachse X des Triebstranges, bestehend aus Rotornabe 10, einer Rotornabe mit Generator 14 verbindenden Antriebswelle 31 und dem Generator 14, der Maschinenträger 12 mit seinem Anschlussbereich 18 für die Azimutdrehverbindung in seinem Durchmesser kleiner als der Durchmesser des Generators 14 ist. Der hinten dem Maschinenträger 12 angeordnete Generator 14 besitzt mit seinem außenliegenden Läufer 14A einen größeren Durchmesser als die Rotornabe 10 und steht seitlich über den Maschinenträger 12 vor.

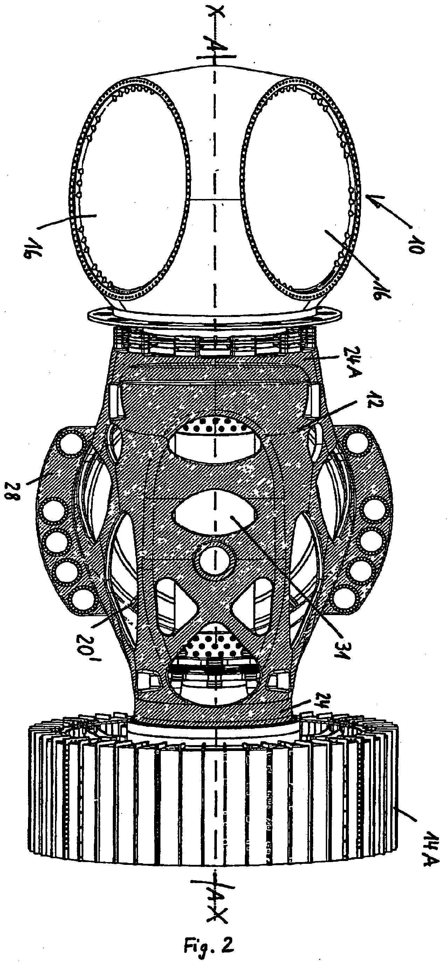

Fig. 2 zeigt die Darstellung aus Fig. 1 in seiner Ansicht von oben. Deutlich zu erkennen ist, dass der Maschinenträger 12 seitlich vorstehende Verbindungsflansche 28 besitzt, über die der Maschinenträger auf dem Turm und/oder einer Azimutdrehverbindung des Turms gelagert ist. Auch sind die Durchbrechungen in dem Maschinenträger 12 wie die Durchbrechung 20' zu erkennen. Die Durchbrechungen geben den Zugang zu dem Inneren des Maschinenträgers frei, ohne seine Steifigkeit bedeutend zu schwächen.

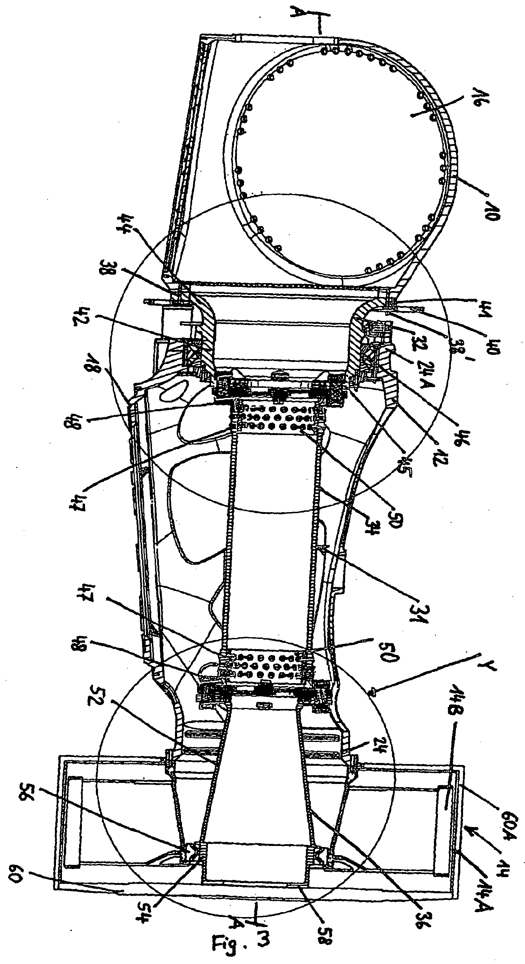

Fig. 3 zeigt einen Schnitt entlang der Linie A-A aus Fig. 2, die der Drehachse X des Triebstranges entspricht. Die Schnittdarstellung erlaubt einen Blick auf die Antriebswelle 31, die einen Rotorwellenabschnitt 32, einen Zwischenwellenabschnitt 34 und einen Generatorwellenabschnitt 36 besitzt. Die Wellenabschnitte 32, 34, 36 sind als separate Bauteile ausgebildet, die jeweils miteinander verbunden und jeweils als Hohlwellen ausgeführt sind. Der Rotorwellenabschnitt 32 ist über eine Schraubverbindung außerhalb des Maschinenträgers mit der Rotornabe 10 verbunden. Bevorzugt besteht die Rotorwellenabschnitt 32 aus Gusseisen mit Kugelgraphit, z.B. dem Werkstoff GJS-400-18-LT gemäß der Norm DIN EN 1563:2012-03 vom März 2012.

In Fig. 3 sind zwei miteinander fluchtende Gewindebohrungen in der Rotornabe 10 und in dem Rotorwellenabschnitt 32 als eine durchgehende Bohrung 38 ausgeführt, in die Schrauben 38' zur Verbindung der Rotornabe 10 mit dem Rotorwellenabschnitt 32 geschraubt sind. Generatorseitig von der Verbindung zwischen Rotornabe 10 und Rotorwellenabschnitt 32 ist eine Arretierscheibe 40 vorgesehen, die eine mechanische Arretierung der Rotornabe für den Fall von Wartungsarbeiten gestattet. Zur Befestigung weist die Arretierscheibe 40 vorzugsweise auch Bohrungen auf, die mit den durchgehenden Bohrungen 38 fluchten. Durch die Schrauben 38' wird dann auch die Arretierscheibe 40 mit dem Rotorwellenabschnitt 32 verbunden.

Der Rotorwellenabschnitt 32 besitzt eine zylindrischen Wellenkörper 42 und eine Krümmung 44. Die Krümmung 44 des Rotorwellenabschnitts 32 beschreibt eine 90°-Neigung, so dass ein nach außen vorstehender erster Flanschbereich 41 zur Verbindung mit der Rotornabe 10 entsteht. Der zylindrische Wellenkörper 42 des Rotorwellenabschnitts 32 ragt in den Maschinenträger 12 hinein und wird über ein doppelreihiges Kegelrollenlager 46 an dem Maschinenträger 12 gelagert. Das doppelreihige Kegelrollenlager besitzt zwei Reihen von Kegelrollen als Wälzkörper, die gegeneinander geneigt sind. Die Neigung ist so, dass das doppelreihige Kegelrollenlager eine O-Konfiguration einnimmt, in der die Richtung der Normalen der generatorseitigen Lauffläche sich mit der Richtung der Normalen der gegenüberliegenden generatorseitigen Lauffläche generatorseitig des Lagers 46 auf der Rotationsache X der Antriebswelle schneidet. Das doppelreihige Kegelrollenlager ist ausgebildet, um die über die Rotornabe auf den Rotorwellenabschnitt 32 wirkenden Kräfte und Momente in axialer und radialer Richtung vollständig aufzunehmen und an den Maschinenträger 12 abzuleiten. An seinem zu dem Zwischenwellenabschnitt 34 weisenden Ende ist der Rotorwellenabschnitt 32 mit einem nach innen vorstehenden zweiten Flanschabschnitt 45 versehen, der zur Befestigung einer Kupplungseinrichtung dient.

An den Rotorwellenabschnitt 32 schließt sich der Zwischenwellenabschnitt 34 an. Der Zwischenwellenabschnitt 34 ist der längste Wellenabschnitt. Der Zwischenwellenabschnitt 34 ist nicht über ein Lager gelagert, sondern mit dem Rotorwellenabschnitt 32 und dem Generatorwellenabschnitt 36 verbunden. Der Zwischenwellenabschnitt 34 besteht aus einem faserverstärktem Verbundmaterial und ist daher deutlich elastischer als der aus Metall, vorzugsweise Gusseisen mit Kugelgraphit gefertigte Rotorwellenabschnitt 32. Der Zwischenwellenabschnitt 34 besitzt zur Verbindung mit dem Rotorwellenabschnitt 32 und dem Generatorwellenabschnitt 36 an seinen Enden jeweils einen Adapter 47 mit je einem Flanschabschnitt 48, der mit einer kreiszylindrischen Verbindungsmanschette 50 über Nieten oder Schrauben mit dem Zwischenwellenabschnitt 34 verbunden ist. Die Verbindungsmanschette 50 kann zusätzlich auch mit dem Zwischenwellenabschnitt 34 verklebt sein.

Der aus einem Faserverbundwerkstoff hergestellte Zwischenwellenabschnitt 34 weist aufgrund der Ausrichtung der Fasern, die vorzugsweise nahezu in axialer Richtung X der Antriebswelle ausgerichtet sind, eine reduzierte Torsionssteifigkeit aus. Vorzugsweise weicht die Ausrichtung der Fasern im Zwischenwellenabschnitt zumindest über einen wesentlichen Bereich des Zwischenwellenabschnitt maximal 15°, bevorzugt maximal 10° und besonders bevorzugt maximal 5° von der axialen Richtung der Antriebswelle ab. Hierdurch ergeben sich einerseits Vorteile bei bestimmten Extremlastfällen, mit denen der Triebstrang der Windenergieanlage beaufschlagt ist, da die Zwischenwelle eine geringere Steifigkeit in axialer Richtung aufweist. Es ergibt sich eine höhere Materialdämpfung im Triebstrang im Bereich des Zwischenwellenabschnitts, wodurch Schwingungen in der Antriebswelle schneller abklingen, und ein verbessertes Generatorkurzschlussverhalten auftritt. Außerdem wird das Gewicht des Antriebsstranges durch die Verwendung des Faserverbundwerkstoffs reduziert. Bevorzugt wird als Faserverbundwerkstoff GFK (Glasfaserverstärkter Kunststoff) verwendet.

Generatorseitig ist der Zwischenwellenabschnitt 34 mit dem Generatorwellenabschnitt 36 verbunden. Der Generatorwellenabschnitt 36 besitzt einen sich konisch zum Generator hin erweiternden Bereich 52, an dem sich ein kreiszylindrischer Lagerabschnitt 54 anschließt. Der Generatorwellenabschnitt 36 erstreckt sich aus dem Maschinenträger 12 hinaus in den Generator 14, bestehend aus dem außenliegenden Läufer 14 A des Generators und dem innenliegenden Stator 14 B des Generators, hinein. Der Generatorwellenabschnitt 36 ist in seinem kreiszylindrischen Lagerabschnitt 54 über ein doppelreihiges Kegelrollenlager 56 gelagert. Das doppelreihige Kegelrollenlager 56 besitzt eine O-Konfiguration ebenso wie das doppelreihige Kegelrollenlager 46 der Rotorwelle. Das generatorseitige Ende des Generatorwellenabschnitts 36 ist über einen innenliegenden Flansch 58 mit einem Rotorschild 60 verbunden, über den der außenliegende Rotor 60A des Generators mit dem Generatorwellenabschnitt 36 verbunden ist.

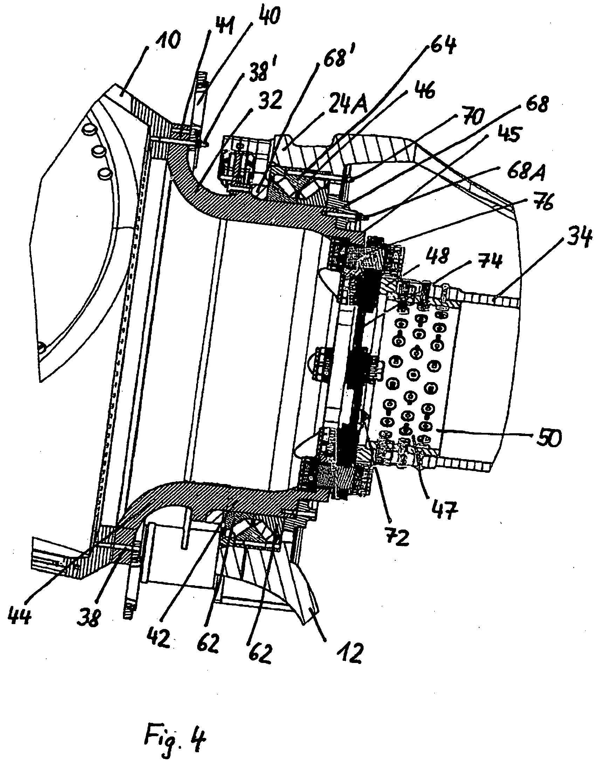

Fig. 4 zeigt eine Detailansicht des Rotorwellenabschnitts 32. Deutlich zu erkennen ist das doppelreihige Kegelrollenlager 46 zur Lagerung der Rotorwelle. Das Lager besteht aus zwei separat ausgebildeten Innenringen 62, zwischen denen gegebenenfalls ein Zwischenring angeordnet werden kann, und einem gemeinsamen Außenring 64. Die Innenringe 62 sind über zwei Positionskörper 68 und 68' auf dem Rotorwellenabschnitt 32 gehalten. Die Positionskörper 68 und 68' üben in axialer Richtung eine Kraft auf die Innenringe 62 aus, um so das doppelreihige Kegelrollenlager entsprechend vorzuspannen und entsprechend der Position des Außenringes zu positionieren. Der Außenring 64 ist über eine Schraube 70 mit dem Maschinenträger 12 verbunden. Hierbei liegt der nabenseitige Positionskörper 68' an einem radial nach außen weisenden Vorsprung, der vorzugsweise sich als Ring über den gesamten Umfang des Rotorwellenabschnitts erstreckt, an. Es können sich aber auch mehrere radiale Vorsprünge über den Umfang des Rotorwellenabschnitts 32 verteilen. Bevorzugt handelt es sich bei dem Positionskörper 68' um einen Distanzring. Der generatorseitige Positionskörper 68 wird hierbei mittels einer Schraube 68A festgelegt, wodurch auch das doppelreihige Kugelrollenlager 46 vorgespannt wird. Dabei weist der Positionskörper 68 eine Bohrung, vorzugsweise Gewindebohrung, auf. Diese fluchtet mit einer Sachlochbohrung mit Gewinde im Rotorwellenabschnitt 32. Diese ist am generatorseitigen Ende des Rotorwellenabschnitts 32 angeordnet.

Die Verbindung zwischen dem Rotorwellenabschnitt 32 und dem Zwischenwellenabschnitt 34 erfolgt über eine Lamellenkupplung 72. Die Lamellenkupplung 72 besteht aus Kupplungsgliedern 74, die zwischen Kupplungsschrauben 76 angebracht sind. Zwischen zwei benachbarten Kupplungsschrauben 76 erstreckt sich jeweils ein Kupplungsglied 74, das beispielsweise aus einem Stahllamellenpaket besteht. Die Kupplungsschrauben 76 sind dabei in Umfangsrichtung abwechselnd mit dem Rotorwellenabschnitt 32 und dem Flanschbereich des Zwischenwellenabschnitts 34 verbunden.

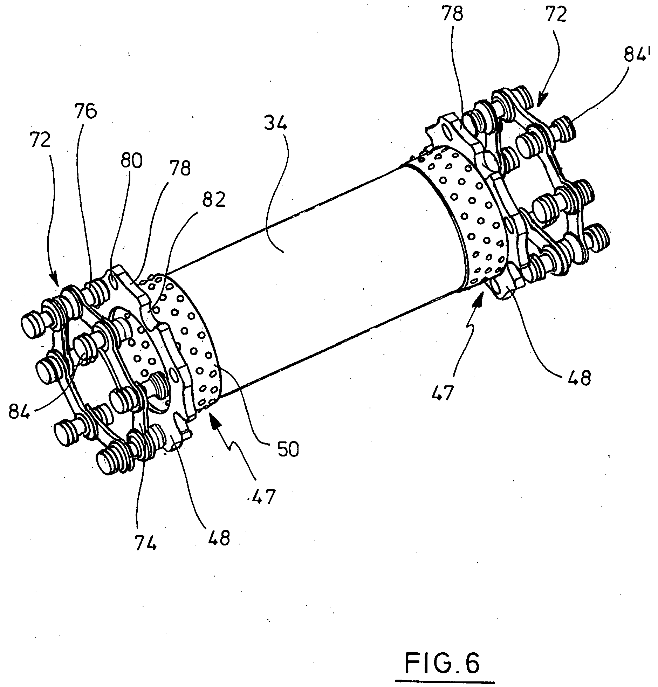

Der Aufbau der Lamellenkupplung 72 und deren Verbindung zum Zwischenwellenabschnitt 34 ist in einer perspektivischen Ansicht von der Seite in Fig. 6 dargestellt. Der Zwischenwellenabschnitt 34 besitzt an seinen Enden jeweils eine Lamellenkupplung 72, die jeweils mit dem Adapter 47 mit dem angrenzenden Wellenabschnitt verbunden ist. Der umlaufende Flanschbereich 78 des Adapters 47 an dem Zwischenwellenabschnitt 34 besitzt abwechselnd Bohrungen 80 und offene Aussparungen 82. Die Bohrungen 80 sind jeweils zur Befestigung eine Kupplungsschraube 76 mit der Lamellenkupplung 72 vorgesehen. Eine Befestigungsschraube 84, die benachbart zu den Kupplungsschrauben 76 liegt, ist nicht mit dem Flanschbereich 78 des Zwischenwellenabschnitts 34 verbunden, sondern mit dem Rotorwellenabschnitt 32 oder dem Generatorwellenabschnitt 36. Der Kopf der Befestigungsschraube 84 wird in dem Befestigungsflansch 78 in der Aussparung 82 aufgenommen. Die elastischen Kupplungsglieder 74 (z.B. aus Federstahl) sind beweglich zwischen den Befestigungsschrauben 76, 84 angeordnet, so dass die Lamellenkupplungen Ausgleichsebenen bildet, in denen ein radialer und axialer Versatz und ein Winkelversatz zwischen den Wellenabschnitten kompensiert werden kann. Bevorzugt ist die Kompensation des Winkelversatzes deutlich geringer als die des axialen Versatzes, d. h. das Verhältnis der Länge des Versatzes beträgt insbesondere 1:2, bevorzugt 1:5 und besonders bevorzugt 1:10. Außerdem ist die Kompensation des Winkelversatzes deutlich geringer als die des radialen Versatzes, d. h. das Verhältnis der Länge des Versatzes beträgt insbesondere 1:6, bevorzugt 1:15 und besonders bevorzugt 1:30. Die Kompensation der Länge des axialen Versatzes zur Länge des radialen Versatzes steht vorzugsweise im Verhältnis 1:2 bis 1:4, besonders vorzugsweise im Verhältnis 1:2,5 bis 1:3,5 und ganz besonders bevorzugt im Verhältnis 1:2,8 bis 1:3,2. Der umlaufende Flanschbereich 78 des Zwischenwellenabschnitts ist mit der Verbindungsmanschette 50 an dem Zwischenwellenabschnitt 34 befestigt.

Die Anbindung des Zwischenwellenabschnitts 34 an den Generatorwellenabschnitt erfolgt entsprechend.

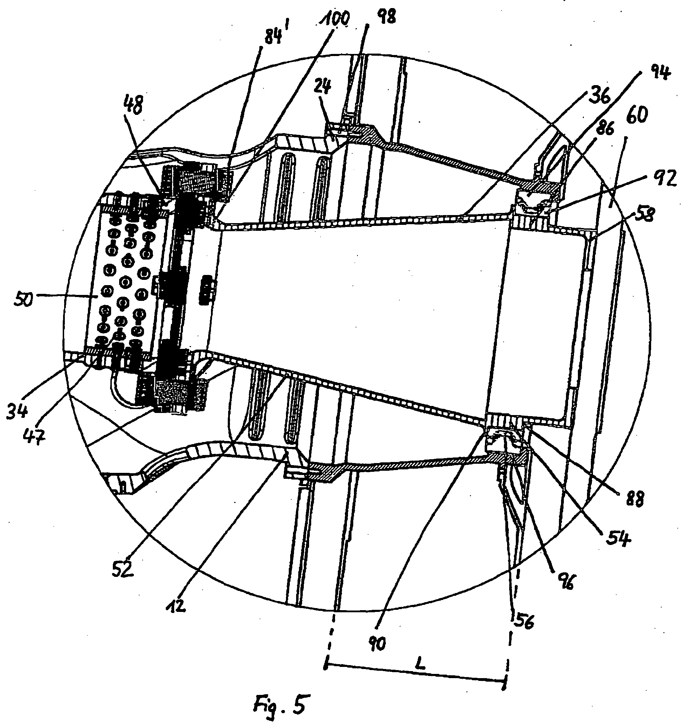

Fig. 5 zeigt das Detail Y aus der Fig. 3. Deutlich zu erkennen ist der Generatorwellenabschnitt 36, der einen zum Generator hin sich konisch erweiterten Bereich 52 und einen kreiszylindrischen Abschnitt 54 besitzt. Der konisch sich erweiternde Bereich läuft vorzugsweise unter dem konstanten Winkel α in Richtung des Generators nach außen. Der Winkel α beträgt insbesondere zwischen 0° und 30°, vorzugsweise zwischen 5° und 15° und insbesondere bevorzugt zwischen 7° und 10°. Der kreiszylindrische Abschnitt 54 besitzt im Bereich des doppelreihigen Kegelrollenlagers 56 einen verstärkten Wandbereich 86, auf dem der Innenring des doppelreihigen Kegelrollenlagers 56 gelagert ist. Hierbei kann der Innenring zwei- oder dreiteilig ausgeführt sein. Hierdurch wird die Montage des doppelreihigen Kegelrollenlagers 56 erleichtert. Der verstärkte Wandbereich 86 wird generatorseitig über einen nach innen zurückspringenden Vorsprung 88 und zur Rotornabe hin über einen vorstehenden Vorsprung 90 begrenzt. Der Vorsprung 90 dient als Anschlag für den Innenring 92 des doppelreihigen Kegelrollenlagers 56. Das Fixieren und Vorspannen des Innenrings 92 erfolgt mittels eines Klemmrings am nach innen zurückspringenden Vorsprung 88. Alternativ kann das doppelreihige Kegelrollenlager auch über einen Positionskörper fixiert und verspannt werden, wie beim doppelseitigen Kegelrollenlager 46 des Rotorwellenabschnitts. Das doppelreihige Kegelrollenlager sitzt bezüglich der axialen Richtung des Generators außermittig und zwar in der von der Rotornabe fortweisenden Hälfte des Generatorwellenabschnitts in dem Stator 14B. Bezogen auf die Länge L des aktiven Generatorsbereichs in axialer Richtung, der im gezeigten Ausführungsbespiel durch die Abstützung des Stators 14 B begrenzt ist, ist das doppelreihige-Kegelrollenlager in axialer Richtung zwischen 1% und 50% der Länge L beabstandet vom generatorseitigen Ende des aktiven Generatorsbereichs, bevorzugt zwischen 3% und 40%, besonders bevorzugt zwischen 5% und 30%. Die Position des doppelreihigen Kegelrollenlagers 56 in axialer Richtung wurde hierbei vorzugsweise so gewählt, dass einerseits eine lange Lagerlebensdauer erreicht wird und gleichzeitig durch das doppelreihige Kegelrollenlager eine gute Abstützung des Stators des Generators erreicht wird.

An seinem von dem Zwischenwellenabschnitt 34 fortweisenden Ende besitzt der Generatorwellenabschnitt 36 einen innenliegenden Flansch 58, der mit einem Rotorschild 60 des außenliegenden Rotors verbunden ist. Die Verbindung erfolgt mittels einer Stift-Schraubverbindung, wobei die Betriebslasten von der Schraubverbindung und die Extremlasten in Form von extremen Torsionsmomenten von der Stiftverbindung getragen werden. Vorzugsweise wird eine zweireihige Schraubverbindung benutzt. Anstelle der Stiftverbindung können auch Passschrauben benutzt werden. In der dargestellten Schnittzeichnung aus Fig. 5 ist aufgrund des gewählten Schnitts die Verbindung nicht dargestellt.

Der Außenring 94 des doppelreihigen Kegelrollenlagers 56 ist an einer Innenwand 96 des Statorträgers gelagert. Der Statorträger ist über eine Schraubenverbindung 98 mit dem Maschinenträger 12 in seinem Flanschbereich 24 verbunden.

Alternativ zum doppelreihigen Kegelrollenlager 56 können auch zwei einreihige Kegelrollenlager in einer O-Konfiguration vorgesehen sein. Im doppelreihigen Kegelrollenlager oder den einreihigen Kegelrollenlagern können Kunststoffsegmentkäfige oder Bolzenkäfige vorgesehen sein. Die Lager können eine integrierte Dichtung oder eine berührende Dichtung oder eine Labyrinthdichtung aufweisen. Auch mehrere dieser Dichtungsarten können gleichzeitig verwendet werden.

Dadurch, dass für das doppelreihige Kegelrollenlager oder die zwei einreihigen Kegelrollenlager die O-Konfiguration gewählt wird, liegen angestellte Lager vor, die bei der Montage gezielt im elastischen Bereich vorgespannt werden. Hierdurch liegt jederzeit an den Lagern eine Mindestlast an, so dass ein für die Lagerbeständigkeit schädliches Schlupfen der Lager sicher vermieden wird. Außerdem wird der Generatorwellenabschnitt durch die angestellten Lager axial und radial präziser geführt, da die Lagerluft reduziert ist. Dies führt zu geringeren Luftspaltänderungen im Generator.

Dank der kompakten Bauform der doppelreihige Kegelrollenlager oder der zwei einreihigen Kegelrollenlager in der O-Konfiguration kann das Lager bzw. die Lagergruppe kostengünstig verbaut werden. Lagerinnen- oder Lageraußenring des doppelreihige Kegelrollenlager oder der zwei einreihigen Kegelrollenlager in der O-Konfiguration können vorteilhafterweise über Positionskörper mittels einer Schraube festgelegt und verspannt werden, was eine einfache Montage ermöglicht.

Vorteilhafterweise werden das doppelreihige Kegelrollenlager 46, das den Rotorwellenabschnitt 32 lagert und das doppelreihige Kegelrollenlager 56, das den Generatorwellenabschnitt 36 und damit den Rotor des Generators 14 A lagert, als Gleichteile verwendet, um hierdurch Kostenvorteile zu erzielen.

Der zum Zwischenwellenabschnitt 34 hin sich konisch verjüngende Generatorwellenabschnitt 52 besitzt einen Krümmungsbereich 100, der einen nach außen vorstehenden Flanschbereich bildet. Der Flanschbereich ist umlaufend im Wechsel mit dem Flanschbereich des Zwischenwellenabschnitts 34 mit dem Lamellenpaket der Lamellenkupplung über Befestigungsschrauben 84' verbunden.

## Patentansprüche

1. Windenergieanlage mit einer Rotornabe (10), an der mindestens ein Rotorblatt befestigt ist, einem Generator (14), der einen außenliegenden Rotor und einen innenliegenden Stator aufweist, und
einer Antriebswelle (31), die einen mit dem Rotor des Generators verbundenen Generatorwellenabschnitt (36) aufweist, **dadurch gekennzeichnet, dass** der Generatorwellenabschnitt (36) über ein doppelreihiges Kegelrollenlager (56) oder zwei einreihige Kegelrollenlager innerhalb des Stators des Generators (14) gelagert ist und die Antriebswelle (31) einen mit der Rotornabe (10) verbundenen Rotorwellenabschnitt (32) aufweist, der über ein zweites Lager (46) gegenüber einem mit dem Stator des Generators (14) verbundenen Maschinenträger gelagert ist.

2. Windenergieanlage nach Anspruch 1, **dadurch gekennzeichnet, dass** das zweite Lager als doppelreihiges Kegelrollenlager (46) ausgebildet ist.

3. Windenergieanlage nach Anspruch 1 oder 2, **dadurch gekennzeichnet, dass** der Generatorwellenabschnitt (36) einen sich in Richtung der Rotomabe (10) konisch verjüngenden Bereich (52) aufweist.

4. Windenergieanlage nach einem der Ansprüche 1 bis 3, **dadurch gekennzeichnet, dass** der Generatorwellenabschnitt (36) einen zylindrischen Bereich (54) aufweist, in dem seine Lagerung erfolgt.

5. Windenergieanlage nach Anspruch 4, **dadurch gekennzeichnet, dass** der zylindrische Bereich (54) auf der der Rotornabe abgewandten Seite des Generatorwellenabschnitts (36) angeordnet ist.

6. Windenergieanlage nach einem der Ansprüche 1 bis 5, **dadurch gekennzeichnet, dass** der Generatorwellenabschnitt (36) innerhalb des Stators des Generators (14) außermittig gelagert ist.

7. Windenergieanlage nach einem der Ansprüche 1 bis 6, **dadurch gekennzeichnet, dass** der Generatorwellenabschnitt (36) in seiner von der Rotornabe (10) fortweisenden Hälfte gelagert ist.

8. Windenergieanlage nach einem der Ansprüche 1 bis 7, **dadurch gekennzeichnet, dass** das doppelreihige Kegelrollenlager (56) oder die zwei einreihigen Kegelrollenlager des Generatorwellenabschnitts (36) eine O-Konfiguration aufweisen.

## Claims

1. Wind turbine with a rotor hub (10), to which at least one rotor blade is attached, a generator (14), which has an external rotor and an internal stator, and a drive shaft (31), which has a generator shaft section (36) which is connected to the rotor of the generator, **characterised in that** the generator shaft section (36) is mounted by means of a double-row tapered roller bearing (56) or two single-row tapered roller bearings inside the stator of the generator (14) and the drive shaft (31) has a rotor shaft section (32), which is connected to the rotor hub (10) and mounted by means of a second bearing (46) on a machine carrier which is connected to the stator of the generator (14).

2. Wind turbine according to claim 1, **characterised in that** the second bearing is formed as a double-row tapered roller bearing (46).

3. Wind turbine according to claim 1 or 2, **characterised in that** the generator shaft section (36) has a conical area (52), tapering in the direction of the rotor hub (10).

4. Wind turbine according to one of claims 1 to 3, **characterised in that** the generator shaft section (36) has a cylindrical area (54) in which it is mounted.

5. Wind turbine according to claim 4, **characterised in that** the cylindrical area (54) is arranged on the side of the generator shaft section (36) facing away from the rotor hub.

6. Wind turbine according to one of claims 1 to 5, **characterised in that** the generator shaft section (36) is mounted eccentrically inside the stator of the generator (14).

7. Wind turbine according to one of claims 1 to 6, **characterised in that** the generator shaft section (36) is mounted in its half pointing away from the rotor hub (10).

8. Wind turbine according to one of claims 1 to 7, **characterised in that** the double-row tapered roller bearing (56) or the two single-row tapered roller bearings of the generator shaft section (36) have an O-configuration.

## Revendications

1. Éolienne avec un moyeu de rotor (10) sur lequel est fixée au moins une pale de rotor, un générateur (14) présentant un rotor externe et un stator interne, et un arbre d'entraînement (31) présentant une section d'arbre de générateur (36) reliée au rotor du générateur, **caractérisée en ce que**
la section d'arbre de générateur (36) est montée à l'intérieur du stator du générateur (14) par le biais d'un roulement à rouleaux coniques à deux rangées (56) ou de deux roulements à rouleaux coniques à une rangée, et l'arbre d'entraînement (31) présente une section d'arbre de rotor (32) reliée au moyeu de rotor (10), laquelle est montée en face d'un support de machine relié au stator du générateur (14) par le biais d'un deuxième roulement (46).

2. Éolienne selon la revendication 1, **caractérisée en ce que** le deuxième roulement est conçu comme un roulement à rouleaux coniques à deux rangées (46).

3. Éolienne selon la revendication 1 ou 2, **caractérisée en ce que** la section d'arbre de générateur (36) présente une région s'affinant de façon conique (52) dans la direction du moyeu de rotor (10).

4. Éolienne selon l'une des revendications 1 à 3, **caractérisée en ce que** la section d'arbre de générateur (36) présente une région cylindrique (54) dans laquelle elle est supportée.

5. Éolienne selon la revendication 4, **caractérisée en ce que** la région cylindrique (54) est agencée sur le côté de la section d'arbre de générateur (36) qui est détourné du moyeu de rotor.

6. Éolienne selon l'une des revendications 1 à 5, **caractérisée en ce que** la section d'arbre de générateur (36) est montée de façon excentrée à l'intérieur du stator du générateur (14).

7. Éolienne selon l'une des revendications 1 à 6, **caractérisée en ce que** la section d'arbre de générateur (36) est montée dans sa moitié opposée au moyeu de rotor (10).

8. Éolienne selon l'une des revendications 1 à 7, **caractérisée en ce que** le roulement à rouleaux coniques à deux rangées (56) ou les deux roulements à rouleaux coniques à une rangée de la section d'arbre de générateur (36) présentent une configuration en 0.
